**Europäisches Patentamt**

**European Patent Office**

**Office européen des brevets**

(19)

(11) Veröffentlichungsnummer : **0 013 714**
**B1**

(12) **EUROPÄISCHE PATENTSCHRIFT**

(45) Veröffentlichungstag der Patentschrift :
26.01.83

(51) Int. Cl.³ : **A 61 C   1/18**

(21) Anmeldenummer : **79104769.9**

(22) Anmeldetag : **29.11.79**

(54) **Zahnärztliche Handstückanordnung mit zwei axial aneinander kuppelbaren Teilen.**

(30) Priorität : **22.12.78 DE 2855682**

(43) Veröffentlichungstag der Anmeldung :
**06.08.80 Patentblatt 80/16**

(45) Bekanntmachung des Hinweises auf die Patenterteilung : **26.01.83 Patentblatt 83/04**

(84) Benannte Vertragsstaaten :
**AT CH FR GB IT**

(56) Entgegenhaltungen :
**AT B 237 796
DE A 2 741 148
DE A 2 802 325
DE B A 219 170
DE B 1 766 598
DE B 2 253 904
DE C 498 684
DE C 1 791 013
DE U 7 434 553**

**ABRIDGEMENTS OF SPECIFICATIONS, class 81,
perold A.D. 1905-8, 1911, London, Seiten 195 und
196.**

(73) Patentinhaber : **SIEMENS AKTIENGESELLSCHAFT
Berlin und München Wittelsbacherplatz 2
D-8000 München 2 (DE)**

(72) Erfinder : **Schuss, Werner
In der Lahrbach 18
D-6148 Heppenheim (DE)**
Erfinder : **Klose, Hans-Jürgen
Gleiwitzerstrasse 44
D-6944 Hemsbach (DE)**
Erfinder : **Landgraf, Hermann
Donaustrasse 1
D-6148 Heppenheim (DE)**

Zahnärztliche Handstückanordnung mit zwei axial aneinander kuppelbaren Teilen

Die Erfindung betrifft eine zahnärztliche Handstückanordnung mit zwei axial aneinander kuppelbaren Teilen, die axiale, gegen Verdrehung sichernde Führungsglieder aufweisen und Kupplungsglieder enthalten, die bei axialem Zusammenschieben der Teile miteinander in Eingriff kommen.

Die Verbindung von zahnärztlichen Handstücken oder Handstückteilen, sei es untereinander, mit einer Schlaucharmatur, oder mit einem Antriebsaggregat, erfolgt häufig mittels einer Schraubverbindung oder mittels einer sogenannten Schnellkupplung. Aus der GB-A-22 552 ist eine Handstückanordnung mit Schraubverbindung bekannt, bei der beide miteinander zu kuppelnden Teile Verzahnungsglieder enthalten, die bei axialem Aneinanderkuppeln die Teile miteinander in Eingriff kommen und so ein Verdrehen der Handstückteile verhindern. Die axiale Fixierung erfolgt hier durch eine Überwurfmutter. Eine solche Schraubverbindung ist, im Vergleich zu den nachfolgend näher erläuterten Schnellkupplungen, jedoch umständlich zu handhaben.

Aus der DE-B2-17 66 598 ist eine zahnärztliche Handstückanordnung bekannt, bei der am einen Handstückteil eine Ringnut und am anderen ein radial bewegbarer, federbelasteter Bolzen angeordnet ist, der beim Aufschieben des die Ringnut enthaltenden Handstückteils in diese einrastet. Das eine Handstückteil ist so gegen unbeabsichtigtes axiales Abgleiten gesichert, kann jedoch um seine Längsachse gedreht werden. Nachdem zum Einrasten des Bolzens in die Ringnut ein gewisser axialer Überhub gegeben sein muß, erlaubt eine solche Anordnung keine kraftschlüssige Verbindung der beiden Teile. Störend ist außerdem der zum Entrasten des Bolzens radial aus dem Handstück vorstehende Betätigungsstift.

Ein axiales kraftschlüssiges Verspannen der Handstückteile ist zwar in Form von Bajonettverschlüssen bekannt (DE-B-12 19 170) ; bei dieser Art von Kupplung ist jedoch ein Verdrehen der beiden Handstückteile zueinander erforderlich. Nun ist aber ein Verdrehen der Handstückteile nicht immer erwünscht, insbesondere bei zahnärztlichen Hand- und Winkelstücken mit inkorporierter Kühlmittelführung, weil man sonst Flachdichtungen an den Kupplungsenden vorsehen müßte, die, um die Kühlmittelleitungen an der Kupplungsstelle dicht zu bekommen, relativ hohe Anpreßkräfte erfordern.

Aufgabe der Erfindung ist es, eine zahnärztliche Handstückanordnung der eingangs genannten Gattung anzugeben, die in einfacher Handhabung ein axiales Verspannen der beiden Teile mit dem Aneinanderkuppeln gewährleistet, ohne daß ein Überhub und ein Verdrehen der beiden Teile erforderlich ist.

Die gestellte Aufgabe wird bei einer Vorrichtung der eingangs genannten Art gemäß der Erfindung dadurch gekennzeichnet, daß Mittel vorhanden sind, die bei in Eingriff befindlichen Kupplungsgliedern auf diese eine von wenigstens einem Federelement erzeugte Kraft ausüben, welche die beiden Teile selbsttätig kraftschlüssig aneinanderdrückt, wobei die Anordnung so getroffen und die Federkraft so gewählt ist, daß die Verbindung durch axialen Zug entgegen der Federkraft wieder lösbar ist.

Vorteilhafte Weiterbildungen und Ausgestaltungen der Erfindung sind in den Unteransprüchen enthalten.

Zwei Ausführungsbeispiele der Erfindung werden nachfolgend anhand der Zeichnung näher erläutert.

Es zeigen :

Figur 1 zwei miteinander zu kuppelnde zahnärztliche Handstückteile in schaubildlicher Darstellung,

Figur 2 Einzelheiten der Kupplungsvorrichtung in schaubildlicher Darstellung teilweise im Längsschnitt,

Figuren 3 und 4 einen Teil der Vorrichtung in einer Rast- und Entraststellung,

Figur 5 ein weiteres Ausführungsbeispiel der erfindungsgemäßen Vorrichtung,

Figuren 6 und 7 einen Teil der in Fig. 5 gezeigten Vorrichtung in einer Rast- und Entraststellung.

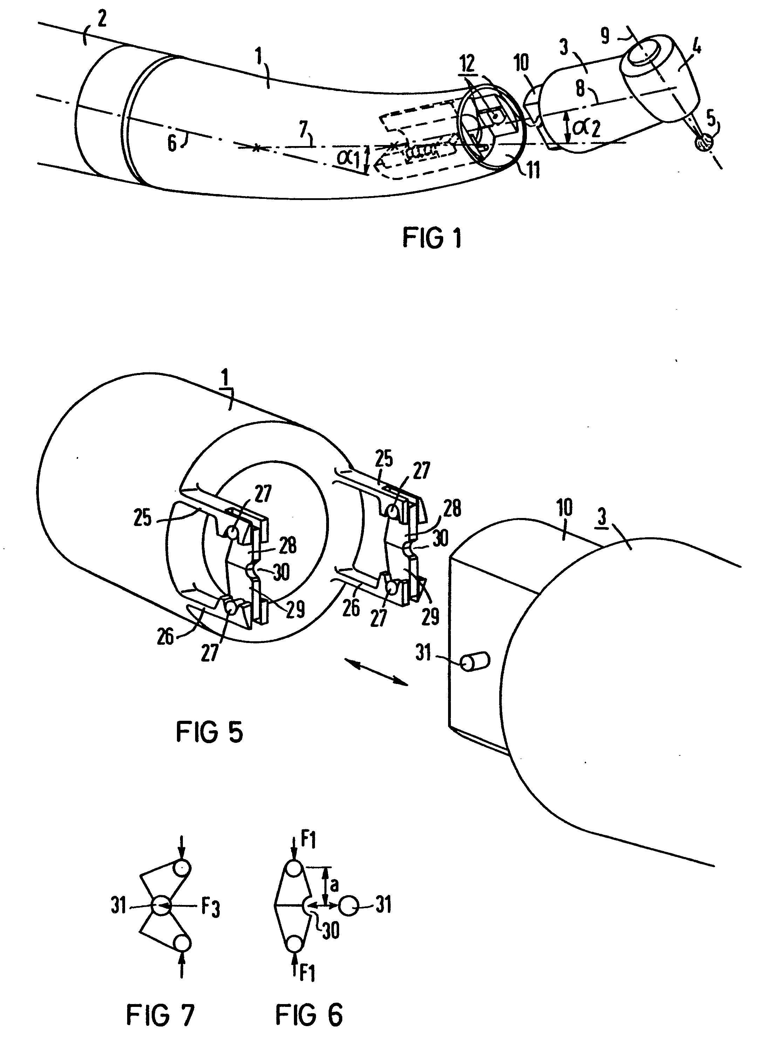

Die Fig. 1 zeigt in einer schaubildlichen Darstellung eine zahnärztliche Handstückanordnung mit einer Griffhülse 1, an der einerseits ein in der Darstellung nur angedeuteter Antriebsmotor 2 angeschlossen und andererseits ein Kopfteil 3 ankuppelbar ist. Das Kopfteil 3 enthält ein Kopfgehäuse 4, in dem ein Werkzeug 5 drehbar gelagert ist. Das Werkzeug 5 wird vom Antriebsmotor 2 über Triebwellen, von denen der besseren Übersichtlichkeit wegen in der Figur nur deren Achsen 6, 7, 8 und 9 eingezeichnet sind, angetrieben. Die Achsen 6 bis 8 sind unter einem Winkel $\alpha_1$ und $\alpha_2$ zueinander geneigt angeordnet ; im Bereich der Schnittpunkte ist ein Unter- oder Übersetzungsgetriebe vorgesehen.

Das Kopfteil 3 ist an seinem der Griffhülse 1 zugewandten Ende mit einer Führungs- und Zentriernase 10 versehen, die in eine entsprechende Ausnehmung 11 der Griffhülse 1 paßt, wodurch das Kopfteil beim Ankuppeln an die Griffhülse ausgerichtet und axial geführt ist. Mit 12 ist eine in den folgenden Figuren noch näher dargestellte Rastvorrichtung bezeichnet, die bei aufgesetztem Kopfteil 3 die beiden Handstückteile 1 und 3 kraftschlüssig miteinander verbindet.

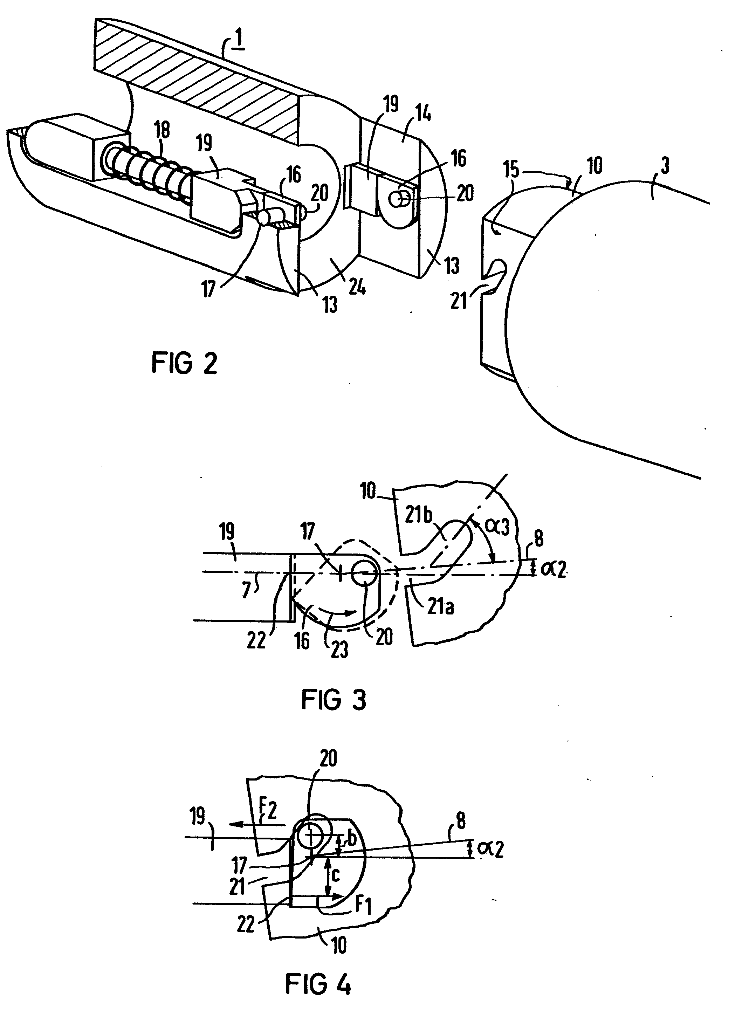

Die Fig. 2 zeigt Einzelheiten der Rastvorrichtung 12 für die beiden Handstückteile 1 und 3. Die Griffhülse 1 enthält beidseitig Fortsätze 13 mit Planflächen 14, die bei aufgesetztem Kopfteil 3 mit Planflächen 15 der Nase 10 des Kopfteils 3 korrespondieren. Das Kopfteil 3 erhält dadurch eine exakte axiale Führung beim Zusammenfügen der Teile.

In den Fortsätzen 13 sind beidseitig Scheiben 16 mittels Achsen 17 drehbar gelagert. Gegen eine Stirnfläche (Schmalseite) der Scheiben 16 drückt mit Hilfe der Kraft jeweils einer Druckfeder 18 beidseitig ein in der Griffhülse 1 achsparallel geführter Druckbolzen 19.

Die Scheiben 16 sind mit nach innen stehenden Führungsstiften oder Zapfen 20 versehen, die in beidseitig der Planflächen 15 der Führungsnase 10 angeordnete Führungskulissen 21 eingreifen, wenn das Kopfteil 3 auf die Griffhülse 1 axial aufgesteckt wird.

Die Zapfen 20 sind, wie aus den Fig. 3 und 4 ersichtlich ist, in einem Abstand b zur Lagerachse 17 der Scheiben 16 angeordnet, bilden also mit diesen in Betrachtung der Kraftübertragung vom Druckbolzen 19 auf den Zapfen 20 einen zweiseitigen Hebel. Die Kulissen 21 sind so angeordnet, daß ein Abschnitt 21a zunächst parallel zur Triebwellenachse 8 und ein Abschnitt 21b in einem spitzen Winkel-($\alpha_3$) dazu verläuft.

Wird das Kopfteil 3 auf die Griffhülse 1 geschoben, so kommt zunächst der Abschnitt 21a einer jeden Kulisse 21 mit dem zugehörigen Zapfen 20 in Eingriff. Der Druckbolzen 19 übt in dieser (ungerasteten) Stellung kein Kippmoment auf die Scheibe 16 aus. Bei weiterem axialem Zusammenfügen der beiden Handstückteile wird der in der Kulisse zwangsgeführte Zapfen 20 in den Kulissenabschnitt 21b übergeführt, wodurch die Scheibe 16 in Richtung des Pfeiles 23 um deren Lagerachse 17 gedreht wird. Bei Erreichen eines bestimmten axialen Ankuppelweges übt der Druckbolzen 19 infolge des nach unten verschobenen Kraftangriffpunktes (Position 22) des Druckbolzens an der Stirnfläche (Schmalseite) der Scheibe 16 (siehe gestrichelte Darstellung) ein Kippmoment aus, wodurch entsprechend der Hebelbeziehung $F_1 \cdot c = F_2 \cdot b$ (wobei $F_1$ die von der Druckfeder 18 ausgeübte Kraft, c der Abstand des Angriffspunktes der Federkraft an der Scheibe 16 (Position 22) von der Lagerachse 17 und c der Abstand der Lagerachse 17 vom Zapfen 20 bedeuten) auf den Zapfen 20 in der Raststellung (Fig. 4) eine Kraft $F_2$ im Sinne einer kraftschlüssigen Verbindung wirkt. Die beiden Handstückteile 1 und 3 werden so selbsttätig kraftschlüssig miteinander verbunden. In der in Fig. 4 gezeigten Raststellung ist an der Stelle 22 eine punktförmige Anlage des Bolzens 19 an der Scheibe 16 gegeben. Die Kraftübertragung erfolgt über den Bolzen 20 am oberen Teil des Kulissenabschnittes 21b. Zum unteren Teil des Kulissenabschnittes 21b sowie zum oberen Kulissenende hin hat der Bolzen 20 ein geringes Spiel. Als Anschlag für das Kopfteil 3 kann entweder die Stirnfläche der beiden Fortsätze 13 oder die rückwärtige Stirnfläche 24 der Griffhülse 1 vorgesehen werden.

Zum Entrasten der beiden Handstückteile braucht lediglich das Kopfteil 3 entgegen der Kraft $F_2$ in axialer Richtung abgezogen zu werden; der Zapfen 20 wird dabei wieder in den Kulissenabschnitt 21a zwangsgeführt, dreht somit die Scheibe 16 um die Lagerachse 17, bis schließlich die in Fig. 3 gezeichnete (entrastete)

Lage wieder erreicht wird.

Die Scheibe 16 kann vorteilhafterweise auch so ausgebildet sein, daß das beim Aufsetzen des Kopfteils 3 auf die Griffhülse 1 im Sinne eines Zusammendrückens der beiden Handstückteile wirkende Drehmoment nicht ab einem bestimmten Kippunkt sofort voll wirksam ist, sondern kontinuierlich zunimmt. Dies kann durch eine geeignete Formgebung der Scheibe 16 (z.B. durch eine ballige Oberfläche) erreicht werden.

Die Fig. 5 bis 7 zeigen ein anderes Ausführungsbeispiel nach der Erfindung. Bei diesem sind an der Griffhülse 1 beidseitig je zwei als Blattfedern ausgebildete Stege 25, 26 vorhanden, zwischen denen zwei mittels Bolzen 27 drehbar gelagerte Blättchen 28, 29 angeordnet sind. Die beiden im Grundriß dreieckigen Blättchen 28, 29 bilden einen einseitigen Hebel mit dem Hebelarm a ; sie weisen an der einen Schnittkante jeweils eine Ausnehmung 30 auf, die zusammen etwa dem halben Umfang eines seitlich der Führungsnase 10 angeordneten Führungsstiftes 31 entspricht. In der entrasteten Stellung (Fig. 6) wirkt über die Blattfedern 25, 26 auf die beiden Blättchen 28, 29 eine vertikale Kraft $F_1$. Wird der Bolzen 31 durch das axiale Aufschieben des Kopfteils 3 auf die Griffhülse 1 in die Ausnehmungen 30 eingedrückt, so wirkt ab einem bestimmten Axialweg eine Querkraft $F_3$ in Richtung des in Fig. 7 angegebenen Pfeiles. Diese Querkraft $F_3$ bewirkt, daß das Kopfteil 3 kraftschlüssig gegen einen Anschlag auf die Griffhülse 1 gedrückt und dort gehalten wird. Zum Entrasten braucht lediglich diese Haltekraft überwunden zu werden.

Sofern es aus Platzgründen möglich ist, kann auch eine Anordnung getroffen werden, bei der die Stege 25, 26 starr sind und an den Blättchen 28, 29 Zugfedern angreifen, die bei geeigneter Wahl des Anlenkpunktes nach Erreichen eines bestimmten Axialweges ein Umkippen der Federkraft im Sinne der kraftschlüssigen Verbindung der beiden Teile bewirken.

Beide aufgezeigten Lösungen stellen eine mechanische Flip-Flop-Rastung dar, die zwei definierte Stellungen einnimmt, wobei in der einen, der ungerasteten Stellung, bis Erreichen eines bestimmten Kipp- oder Totpunktes bei axialem Zusammenschieben der Teile eine Kraft erzeugt wird, die die beiden Teile versucht auseinanderzudrücken und bei Erreichen des Kippunktes die Rastung in die zweite Stellung umkippt, in der auch die Kraftwirkung umgekehrt wird und eine Kraft im Sinne eines kraftschlüssigen Aneinanderdrückens der beiden Teile erzeugt wird.

Ein wesentlicher Vorteil der erfindungsgemäßen Rastvorrichtung ist, daß zum Verbinden der Teile kein axialer Überhub erforderlich ist. Dies ist insbesondere bei Handstückteilen von Vorteil, in deren Innerem Triebwellen angeordnet sind, die miteinander exakt in Eingriff kommen müssen. Die Anwendung der vorbeschriebenen Rastvorrichtung ist jedoch dadurch nicht auf die Kupplung der in den Ausführungsbeispielen beschriebenen Handstückteile beschränkt ; sie kann ebenso zum Kuppeln von anderen Handstückteilen oder auch zum Kuppeln von Schlauchanschlußarmaturen an Handstücke ein-gesetzt werden.

**Ansprüche**

1. Zahnärztliche Handstrickanordnung mit zwei axial aneinander kuppelbaren Teilen (1, 3), die axiale, gegen Verdrehung sichernde Führungsglieder (10, 11) aufweisen und Kupplungsglieder (20, 21) enthalten, die bei axialem Zusammenschieben der Teile miteinander in Eingriff kommen, dadurch gekennzeichnet, daß Mittel (16 bis 19 und 25 bis 29) vorhanden sind, die bei in Eingriff befindlichen Kupplungsgliedern (20, 21 ; 30, 31) auf diese eine von wenigstens einem Federelement (18) erzeugte Kraft ($F_2$, $F_3$) aus-üben, welche die beiden Teile (1, 3) selbsttätig kraftschlüssig aneinanderdrückt, wobei die Anordnung so getroffen ist, daß die Verbindung durch axialen Zug entgegen der Federkraft ($F_2$, $F_3$) wieder lösbar ist.

2. Handstrickanordnung nach Anspruch 1, dadurch gekennzeichnet, daß am einen Teil (1 oder 3) eine mechanische Flip-Flop-Rasteinrichtung (16 bis 19 ; 25 bis 29) mit zwei definierten Stellungen (Fig. 3, 4 und Fig. 6, 7) vorhanden ist, welche in der einen, der ungekuppelten Stellung (Fig. 3 und 6) kein und in der anderen, der gekuppelten Stellung (Fig. 4 und 7) ein Kippmoment auf die Kupplungsglieder (20, 21, 30, 31) im Sinne der Kraftschlüssigen Verbindung ausübt, wobei die Umschaltung von der einen zur anderen Stellung nach Erreichen eines bestimmten axialen Ankuppelweges erfolgt.

3. Handstrickanordnung nach Anspruch 1 oder 2, dadurch gekennzeichnet, daß am einen Teil (1) wenigstens ein Schwenkhebel (16, 28) gelagert ist, an dem in einem Abstand (a, b) zur Schwenkachse (17) ein Mitnehmerstift (20) oder eine für einen solchen ausgebildete Ausnehmung (30) angeordnet ist, welche die Kupplungsglieder der einen Teils (1) bilden, die mit entsprechend ausgebildeten Gegengliedern (21, 31) des anderen Teils (3) in Eingriff kommen.

4. Handstrickanordnung nach Anspruch 3, dadurch gekennzeichnet, daß als Schwenkhebel ein zweiseitiger Schwenkhebel (Fig. 2 bis 4) vorgesehen ist, an dem ein Federelement (18) mittel- oder unmittelbar angreift und daß am anderen Teil (3) eine Führungskulisse (21) vorhanden ist, in die der Mitnehmerstift (20) bei axialem Ankuppeln der beiden Teile (1, 3) geführt ist und daß die Führungskulisse (21) so ausgebildet ist, daß der Schwenkhebel bei axialem Zusammenführen der Teile gedreht und so die Rasteinrichtung von der einen (Fig. 3) in die andere Stellung (Fig. 4) umgeschaltet wird.

5. Handstrickanordnung nach einem der Ansprüche 1 bis 4, dadurch gekennzeichnet, daß der Schwenkhebel von einer Scheibe (16) mit einem exzentrisch gelagerten Zapfen (20) gebildet ist und die Federkraft (F) von einem an der einen Schmalseite der Scheibe (16) anliegenden federbelasteten Druckbolzen (19) erzeugt wird.

6. Handstrickanordnung nach Anspruch 5, da-durch gekennzeichnet, daß die Führungsku-lisse (21) eine Bahn beschreibt, durch die in der entrasteten Stellung (Fig. 3) kein und mit zu-nehmendem axialem Zusammenführen der Tei-le (1, 3) ein zunehmendes Drehmoment im Sinne der kraftschlüssigen Verbindung der Teile (1, 3) auf den Zapfen (20) ausgeübt wird.

7. Handstrickanordnung nach Anspruch 5, dadurch gekennzeichnet, daß die Kulisse (21) einen zunächst parallelen, und dann unter einem spitzen Winkel ($\alpha_3$) zur Symmetrieachse (8) des zu kuppelnden Teils (3) verlaufenden Kulissenab-schnitt (21b) aufweist.

8. Handstrickanordnung nach einem der Ansprüche 1 bis 3, dadurch gekennzeichnet, daß zwei einseitige Hebel (Fig. 5 bis 7, 28, 29) mit jeweils einer für einen Mitnehmerstift (31) passenden Ausnehmung (30) vorhanden sind, die mittels Federelemente (25, 26) gegeneinander gedrückt werden, wobei die Anordnung so getroffen ist, daß in der Raststellung (Fig. 7) der Mitnehmerstift (31) formschlüssig mit den Ausnehmungen (30) in Eingriff steht.

9. Handstrickanordnung nach Anspruch 8, dadurch gekennzeichnet, daß die beiden Hebel (28, 29) in federnden Stegen (25, 26) gelagert sind.

10. Handstrickanordnung nach Anspruch 2, dadurch gekennzeichnet, daß beidseitig der axial miteinander zu verbindenden Teile (1, 3) eine Flip-Flop-Rasteinrichtung (16 bis 19 und 25 bis 29) vorhanden ist.

11. Handstrickanordnung nach einem der Ansprüche 1 bis 10, dadurch gekennzeichnet, daß der eine Handstrickteil der Kopfteil (3) und der andere die Griffhülse (1) eines zahnärztlichen Handstückes sind.

**Claims**

1. A dental hand tool arrangement comprising two components (1, 3) which can be axially coupled to one another and which comprise axial guide elements (10, 11) which are secured against rotation and which contain coupling elements (20, 21) which engage with one another when the components are axially pushed together, characterised in that means (16 to 19 and 25 to 29) are provided which, when the coupling elements (20, 21 ; 30, 31) are engaged, exert upon the latter a force ($F_2$, $F_3$) which is produced by at least one spring element (18) and which automatically brings the two components (1, 3) into a force-locking contact, the arrangement being such that the connection can be released by means of an axial pull in opposition to the spring force ($F_2$, $F_3$).

2. A hand tool arrangement according to Claim 1, characterised in that on the first component (1 or 3), there is arranged a mechanical flip-flop locking device (16 to 19 ; 25 to 29) which has two defined positions (Figs. 3, 4 and Figs. 6, 7) and which in the first, i.e. the uncoupled, position (Figs. 3 and 6) does not, but in the other, i.e. the coupled, position (Fig. 4 and 7), does exert a tilting moment on the coupling elements (20, 21, 30, 31) in the direction of a force locking connection, the switch-over from the one to the other position taking place when a predetermined axial coupling travel has been reached.

3. A hand tool arrangement according to Claim 1 or 2, characterised in that on the first component (1), there is mounted at least one pivot lever (16, 28) on which is arranged, at a distance (a, b) from the pivot axis (17), a follower pin (20), or a recess (30) which is formed to receive such a pin, which pin or recess forms the coupling element of the first component (1) which engages with a correspondingly formed counter-element (21, 31) of the other component.

4. A hand tool arrangement as claimed in Claim 3, characterised in that as the pivot lever, a double-sided pivot lever is provided (Fig. 2 to 4), which indirectly or directly engages with a spring element (18), and that the other component (3) is provided with a guide slot (21) into which the follower pin (20) is moved during the axial coupling of the two components (1, 3) ; and that the guide slot (21) is so formed that when the components are axially brought together, the pivot lever rotates and in this way the locking device is switched over from the one (Fig. 3) into the other position (Fig. 4).

5. A hand tool arrangement according to one of Claims 1 to 4, characterised in that the pivot lever consists of a place (16) with an eccentrically mounted pin (20), and the spring force (F) is produced by a spring-loaded pressure bolt (19) which is in contact with one edge of the plate (16).

6. A hand tool arrangement according to Claim 5, characterised in that the guide slot (21) describes a path through which, in the unlocked position (Fig. 3), no torque is exerted on the pin (20) but as the components (1, 3) are increasingly brought axially together, an increasing torque is exerted on the pin (20) in the direction of a force-locking connection of the components (1, 3).

7. A hand tool arrangement according to Claim 5, characterised in that the slot (21) has a slot section (21b) which initially runs parallel to and then at an acute angle ($\alpha_3$) to the axis of symmetry (8) of the component (3) to be coupled.

8. A hand tool arrangement according to one of Claims 1 to 3, characterised in that two single-sided levers (Fig. 5 to 7, 28, 29) are provided, each of which has a recess (30) suitable for a follower pin (31), and which are pressed against one another by means of spring elements (25, 26), the arrangement being such that in the locking position (Fig. 7), the follower pin (31) engages with the recesses (30) in form-locked manner.

9. A hand tool arrangement according to Claim 8, characterised in that the two levers (28, 29) are mounted in resilient cross-pieces (25, 26).

10. A hand tool arrangement according to Claim 2, characterised in that on both sides of the components (1, 3) to be axially connected to one another, a flip-flop locking device (16 to 19 and 25 to 29) is arranged.

11. A hand tool arrangement according to one of Claims 1 to 10, characterised in that the one hand tool component represents the head component, and the other hand tool component represents the gripping sleeve (1), of a dental hand tool.

**Revendications**

1. Agencement pour une pièce à main de dentisterie comportant deux éléments (1, 3) susceptibles d'être accouplés axialement entre eux et présentant des organes de guidage axiaux (10, 11) et offrant une sécurité contre un décalage angulaire, ainsi que des organes d'accouplement (20, 21) qui, lors de l'assemblage axial des éléments entre eux, sont en prise, caractérisé par le fait que des moyens (16 à 19 et 25 à 29) sont prévus qui, lorsque les organes d'accouplement (20, 21 ; 30, 31) sont en prise, exercent sur eux une force ($F_2$, $F_3$) produite par au moins un élément de ressort (18) et appliquent l'un contre l'autre les deux éléments (1, 3) automatiquement et à transmission de forces, l'agencement étant réalisé de telle manière que la liaison est à nouveau rompue par une traction axiale, à l'encontre de la force élastique ($F_2$, $F_3$).

2. Agencement pour une pièce à main selon la revendication 1, caractérisé par le fait qu'au niveau d'un élément (1 ou 3) est prévu un dispositif d'encliquetage mécanique flip-flop (16 à 19 ; 25 à 29) à deux positions déterminées (figures 3, 4 et figures 6, 7), lequel, dans une position, la position de désaccouplement (figures 3 et 6), n'exerce aucun moment de basculement sur les éléments d'accouplement (20, 21, 30, 31) et dans l'autre exerce un moment de basculement sur les éléments d'accouplement (20, 21, 30, 31) dans le sens d'une liaison à transmission de forces, le passage de l'une à l'autre position ayant lieu après que soit atteinte une course d'accouplement axiale déterminée.

3. Agencement pour une pièce à main selon la revendication 1 ou 2, caractérisé par le fait que sur un élément (1) est articulé au moins un levier basculant (16, 28) sur lequel est prévue, à une distance (a, b) de l'axe de basculement (17), une cheville d'entraînement (20) ou une encoche (30) réalisée pour une telle cheville, qui forment les éléments d'accouplement du dit élément (1), qui viennent en prise avec des éléments d'accouplement (21, 31) réalisés de façon correspondante, de l'autre élément (3).

4. Agencement pour une pièce à main selon la revendication 3, caractérisé par le fait qu'il est prévu, comme levier basculant, un levier basculant à deux bras (figures 2 à 4) qui est attaqué directement ou indirectement par un élément de ressort (18) et par le fait que sur l'autre élé-

ment (3) est prévue une coulisse de guidage (21) dans laquelle est guidée la cheville d'entraînement (20) lors de l'accouplement axial des deux éléments (1, 3), et par le fait que la coulisse de guidage (21) est réalisée de telle façon que le levier basculant, lors de l'assemblage axial des éléments, est basculé et commute ainsi le dispositif d'encliquetage de l'une (figure 3) dans l'autre position (figure 4).

5. Agencement pour une pièce à main selon l'une des revendications 1 à 4, caractérisé par le fait que le levier basculant est constitué par un disque (16) à tourillon excentré (20) et la force élastique (F) est produite par une cheville de pression chargée par ressorts et portant contre le côté étroit du disque (16).

6. Agencement pour une pièce à main selon la revendication 5, caractérisé par le fait que la coulisse de guidage (21) décrit une trajectoire à l'aide de laquelle, dans la position de désencliquetage (figure 3), il n'est pas produit de couple de rotation sur le tourillon (20) dans le sens d'une liaison à transmission de forces des deux éléments (1, 3), un tel couple de rotation croissant étant produit lors de l'assemblage axial croissant des deux éléments (1, 3).

7. Agencement pour une pièce à main selon la revendication 5, caractérisé par le fait que la coulisse (21) comporte une section de coulisse (21b) s'étendant d'abord parallèlement et ensuite sous un angle aigu ($\alpha_3$) par rapport à l'axe de symétrie (8) de l'élément (3) à accoupler.

8. Agencement pour une pièce à main selon l'une des revendications 1 à 3, caractérisé par le fait qu'il est prévu deux leviers à un bras (figures 5 à 7, 28, 29) comportant chacun une encoche dans laquelle peut s'adapter une cheville d'entraînement (31), encoches qui sont pressées l'une contre l'autre à l'aide d'éléments élastiques (25, 26), la disposition étant telle que dans la position d'encliquetage (figure 7) la cheville d'entraînement (31) est en prise, par formes complémentaires, avec les encoches (30).

9. Agencement pour une pièce à main selon la revendication 8, caractérisé par le fait que les deux leviers (28, 29) sont montés dans des barrettes élastiques (25, 26).

10. Agencement pour une pièce à main selon la revendication 2, caractérisé par le fait que de part et d'autre des éléments (1, 3) qui sont à relier axialement entre eux, est prévu un dispositif d'encliquetage flip-flop (16 à 19 et 25 à 29).

11. Agencement pour une pièce à main selon l'une des revendications 1 à 10, caractérisé par le fait que l'un des éléments de la pièce à main constitue l'élément de tête (3) et l'autre, la douille de préhension (1) d'une pièce à main pour dentisterie.

FIG 1

FIG 5

FIG 7        FIG 6

FIG 2

FIG 3

FIG 4